# EUROPÄISCHE PATENTSCHRIFT

(11) **EP 0 532 720 B1**
(45) Veröffentlichungstag und Bekanntmachung des Hinweises auf die Patenterteilung: **27.12.1995**
(21) Anmeldenummer: 92905346.0
(22) Anmeldetag: 22.02.1992
(51) Int. Cl.: B25J 18/02, B25J 9/08, B25J 9/14, F15B 15/02

(54) **DRUCKMITTELBETÄTIGTE LINEAREINHEIT**
HYDRAULICALLY-CONTROLLED LINEAR DISPLACEMENT UNIT
UNITE DE DEPLACEMENT LINEAIRE A COMMANDE HYDRAULIQUE

(30) Priorität: 06.04.1991 DE 4111202
(43) Veröffentlichungstag der Anmeldung: 24.03.1993
(73) Patentinhaber: ROBERT BOSCH GMBH, 70442 Stuttgart (DE)
(72) Erfinder: GOSDOWSKI, Gerhard, D-7120 Bietigheim (DE); NEUWIRTH, Josef, D-7300 Esslingen 1 (DE)
(86) Internationale Anmeldenummer: DE9200138
(87) Internationale Veröffentlichungsnummer: WO9217321

(56) Entgegenhaltungen:
- EP-A- 0 194 234
- EP-A- 0 299 285
- FR-A- 2 413 184

## Beschreibung

Die Erfindung geht aus von einer druckmittelbetätigten Lineareinheit nach der Gattung des Hauptanspruchs.

Solch eine Lineareinheit ist aus EP-A1-0 309 613 bekannt.

Bei dieser Lineareinheit sind in einem einheitlichen Gehäuseblock die Führungselemente für die Kolbenstange und die Führungsstange sowie der Druckmittelantrieb integriert. Für die verschiedenen Einsatzgebiete sind Lineareinheiten mit unterschiedlichen Hublängen erforderlich. Zur Realisierung der verschiedenen Hublängen muß neben den Führungs- und Kolbenstangen auch der Gehäuseblock in seiner Länge variiert werden. Damit sind für die verschiedenen Hublängen nur kleine Teilelosgrößen mit hoher Fertigungstiefe möglich.

Bei einer anderen, aus EP-B1-0 017 779 bekannten Lineareinheit befindet sich die Antriebseinheit in einem Gehäuseblock, der an beiden Stirnflächen mit Endflaschen versehen ist, in denen die Führungselemente für die Kolbenstange und die Führungsstange untergebracht sind. Diese Ausführung bedingt, daß die Führungstange und die Kolbenstange an beiden Seiten aus dem Gehäuseblock herauszuführen sind. Dadurch ist es nicht möglich die Lineareinheit als kompakte Einheit auszuführen.

### Vorteile der Erfindung

Die erfindungsgemäße Lineareinheit mit den Merkmalen des Hauptanspruchs hat den Vorteil, daß ein kompakter modularer Aufbau möglich ist. Ein weiterer Vorteil besteht darin, daß alle wesentlichen Funktionselemente, die eine hohe Fertigungstiefe erfordern, in die Führungseinheit integriert sind, wodurch in der Fertigung die Teilelosgröße erhöht werden kann.

Durch die in den Unteransprüchen aufgeführten Maßnahmen sind vorteilhafte Weiterbildungen der im Hauptanspruch angegebenen Lineareinheit möglich. Besonders vorteilhaft ist es, für alle Hublängen die Führungseinheit mit einer konstanten Länge einzusetzen. Ein weiterer Vorteil besteht darin, die Führungseinheit und die Antriebseinheit aus einem Strangpreßprofil herzustellen, wobei die Strangpreßprofile jeweils die Durchführungen für die Kolbenstange und die Führungsstange enthalten. Zweckmäßig ist weiterhin, wenn das Strangpreßteil der Antriebseinheit eine weitere Bohrung als Druckmittelleitung enthält. Eine für einen kompakten Aufbau vorteilhafte Ausführung besteht darin, daß zwei Führungsstangen vorgesehen sind, die im Bereich der Antriebseinheit mittels eines Verbindungselements miteinander verbunden sind. Eine weitere zweckmäßige Ausführungsform besteht darin, daß die Antriebseinheit mit Endlagenschalter versehen ist, die von einer mit der Führungsstange verbundenen Fläche bedämpft sind.

### Zeichnung

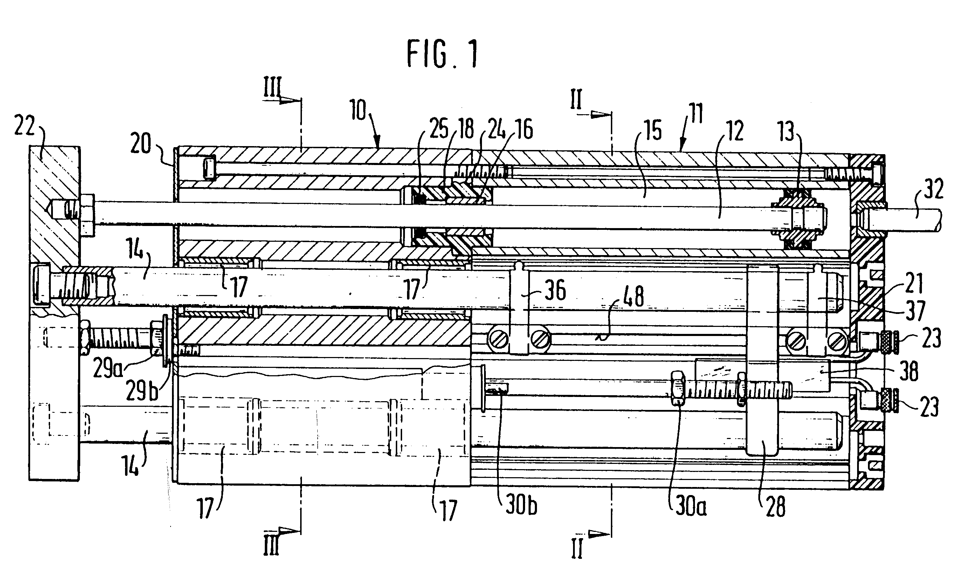

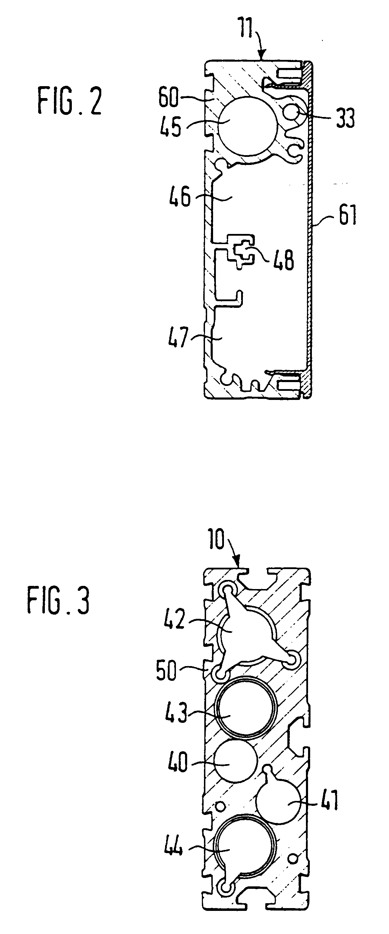

Ein Ausführungsbeispiel der Erfindung ist in der Zeichnung dargestellt und in der nachfolgenden Beschreibung näher erläutert. Es zeigen Figur 1 einen Längsschnitt durch eine erfindungsgemäße Lineareinheit, Figur 2 einen Querschnitt durch das Strangpreßprofil der Antriebseinheit nach Linie II-II gemäß Figur 1 und Figur 3 einen Querschnitt durch ein Strangpreßprofil der Führungseinheit nach Linie III-III gemäß Figur 1.

### Beschreibung des Ausführungsbeispieles

Die in Figur 1 dargestellte Lineareinheit besteht aus einer Führungseinheit 10, einer Antriebseinheit 11, einer Kolbenstange 12, zwei Führungsstangen 14 und einem Arbeitszylinder 15, in dem ein mit der Kolbenstange 12 verbundener Kolben 13 geführt ist. Die aus der Führungseinheit 10 herausragenden Enden der Kolbenstange 12 und der beiden Führungsstangen 14 sind an einem gemeinsamen Arbeitsflansch 22 befestigt. Am Arbeitsflansch 22 werden die weiteren Baueinheiten der Lineareinheit, wie beispielsweise eine Greifereinrichtung, angebracht.

Der Gehäuseblock der Führungseinheit 10 und der Antriebseinheit 11 sind jeweils aus einem Strangpreßprofil 50 bzw. 60 (Figur 2 und Figur 3) gefertigt. Das Strangpreßprofil 50 (Figur 3) der Führungseinheit 10 weist verschiedene Hohlräume 40 bis 44 auf. Dabei dient der Hohlraum 42 zur Durchführung der Kolbenstangen 12 und die Hohlräume 43 und 44 jeweils zur Durchführung der beiden Führungsstangen 14. Das Gehäuse der Antriebseinheit 11 besitzt ebenfalls einen Hohle raum 45, welcher zum Hohlraum 42 der Führungseinheit 10 hin fluchtend angeordnet ist. Das Profil 60 (Figur 2) der Antriebseinheit 11 besitzt für die beiden Führungsstangen 14 jeweils seitlich offene Aussparungen 46, 47, wodurch das Profil 60 eine offene Raumform annimmt. Zur Erzielung eines geschlossenen Gehäuses wird das Profil 60 seitlich mit einer Schutzabdeckung 61 versehen, welche mit in das Profil 60 einrastende Schnappverbindungen ausgerüstet ist.

Die Führungseinheit 10 und die Antriebseinheit 11 sind in Richtung der Linearbewegung hintereinander angeordnet und miteinander lösbar verbunden. Dazu sind in den Profilen 50 und 60 weitere Bohrungen vorgesehen, die als Durchführung und als Gewindebohrung für Verbindungsschrauben dienen. Im vorliegenden Ausführungsbeispiel werden beide Profile 50 und 60 durch beispielsweise vier Imbusschrauben verbunden, die durch das Profil 50 des Grundkörpers 10 durchgesteckt und in die mit dem Gewinde versehenen Bohrungen der Antriebseinheit 11 geschraubt sind.

Die Führungseinheit 10 ist an der Sirnseite des Profils 50 mit einer Frontplatte 20 versehen, die die entsprechenden Durchführungen für die Kolbenstange 12 und die beiden Führungsstangen 14 enthält. Die Stirnseite des Profils 60 der Antriebseinheit 11 ist mit einer Endplatte 21 verschlossen.

In der Führungseinheit 10 ist eine Führungsbuchse 16 für die Kolbenstange 12 sowie jeweils zwei Führungsbuchsen 17 für jede Führungsstange 14 eingesetzt. Die Führungsbuchsen 17 sind beispielsweise Linearkugellager, die jeweils an den beiden Stirnflächen des Profils 50 in die Hohlräume 43 und 44 eingelassen sind. Der Hohlraum 45 der Antriebseinheit 11 bildet den Arbeitszylinder 15 für den Pneumatikantrieb. Die Führungsbuchse 16 ist in eine weitere Buchse 18 eingesetzt, welche mit einem Bund 24 versehen ist. Die Buchse 18 ist in die mit der Stirnfläche der Antriebseinheit 11 in Verbindung stehenden Stirnfläche der Führungseinheit 10 derart eingesetzt, daß der Bund 24 den Arbeitszylinder 15 zur Führungseinheit 10 hin luftdicht verschließt. Die translatorisch bewegte Kolbenstange 12 ist in der Buchse 18 zusätzlich mit einer die Kolbenstange 12 umschließenden Dichtung 25 versehen. Zur Bildung des Arbeitszylinders 15 ist die Endplatte 21 am Profil 60 so montiert, daß sie den Hohlraum 45 luftdicht verschließt.

Zum Antrieb des Kolbens 13 ist der Arbeitszylinder 15 im Bereich der beiden Stirnseiten jeweils mit einem Druckluftanschluß versehen. In der vorliegenden Zeichnung ist dabei nur der Druckluftanschluß 32 gezeigt, welcher in die Endplatte 21 eingesetzt ist und die Druckluft an der rechten Stirnseite dem Arbeitszylinder 15 zuführt. An der diesem Druckluftanschluß 32 gegenüberliegenden Seite des Arbeitszylinders 15 ist eine weitere nicht dargestellte Druckluftzuleitung in den Arbeitszylinder 15 eingeführt. Dieser Druckluftanschluß wird in den Arbeitszylinders 15 mittels einer im Profil 60 eingearbeiteten Bohrung 33 zugeleitet. Die Druckmittelleitung 33 ist mit einer Querbohrung versehen, die in dem Arbeitszylinder 15 hineinreicht. Der Druckluftanschluß für die Druckmittelleitung 33 erfolgt ebenfalls durch die Endplatte 21 ähnlich dem Druckmittelanschluß 32.

Die Bewegungsrichtung des Kolbens 13 wird von einem außerhalb der Antriebseinheit 11 angeordneten und in der Zeichnung nicht dargestellten Pneumatikventil gesteuert.

Die in die Antriebseinheit 11 hineinragenden beiden Führungsstangen 14 sind innerhalb der Antriebseinheit 11 mittels eines Verbindungselements 28 miteinander starr verbunden. Damit ist gesichert, daß die Führungsstangen 14 in ihren Führungen nicht verkanten. Durch die Ausbildung des seitlich offenen Profils 60 ist es möglich, das Verbindungselement 28 innerhalb der Antriebseinheit unterzubringen.

Zur Einstellung des Hubs der Lineareinheit sind zwei induktive Endlagenschalter 36, 37 vorgesehen, die von einer mit den Führungsstangen 14 fest verbundenen Bedämpfungsfläche 38, beispielsweise einen Blechstreifen, bedämpft werden.

Zur Einstellung der Hublänge sind die Endlagenschalter 36, 37 in einer Nut 48 des Profils 60 längsverschiebbar angeordnet. Über zwei an der Endplatte 21 vorgesehenen Anschlüsse 23 erfolgt die elektrische Ankopplung der beiden induktiven Endlagenschaltern 36, 37.

Zur Begrenzung der Hublänge sind zusätzlich zwei einstellbare Anschläge 29a, b und 30a, b vorgesehen, wobei jedem Anschlagteil 29a bzw. 30a jeweils ein Dämpfungsmittel 29b bzw. 30b zugeordnet ist. Die Dämpfungsmittel 29b und 30b sind in die Durchführungen 40 bzw. 41 des Profils 50 eingesetzt.

Durch die Ausrüstung der Führungseinheit 10 mit allen Führungselementen für die Kolbenstange 12 und die beiden Führungsstangen 14, sind die sämtlichen Funktionen in der Führungseinheit 10 integriert, die eine hohe Fertigungstiefe erfordern. Damit ist es möglich, für die verschiedenen Hublängen eine Führungseinheit 10 mit konstanter Länge zu verwenden, wobei nur die Antriebseinheit 11, die Kolbenstange 12, die beiden Führungsstangen 14 und die Schutzabdeckung 61 in ihrer Länge variiert werden muß. Neben dem beschriebenen Pneumatikantrieb ist es gleichsam denkbar, die Lineareinheit mit einem hydraulischen Antrieb auszurüsten.

## Patentansprüche

1. Druckmittelbetätigte Lineareinheit für Handhabungsgeräte der industriellen Fertigung, insbesondere pneumatisch betätigte Lineareinheit, mit einem Gehäuseblock, in dem mindestens ein Arbeitszylinder für mindestens einen Kolben und Führungselemente für mindestens eine Kolbenstange und mindestens eine Führungsstange untergebracht sind, dadurch gekennzeichnet, daß der Gehäuseblock aus einer Führungseinheit (10) und einer Antriebseinheit (11) gebildet ist, welche in Richtung der Linearbewegung hintereinander zu einer kompakten Einheit lösbar miteinander verbunder verbunden sind, und daß die Führungseinheit (10) sämtliche Führungselemente (16, 17) für die Kolbenstange (12) und die Führungsstange (14) enthält.

2. Lineareinheit nach Anspruch 1, dadurch gekennzeichnet, daß die Führungseinheit (10) für alle zu realisierenden Hublängen eine konstante Länge hat.

3. Lineareinheit nach Anspruch 1 oder 2, dadurch gekennzeichnet, daß die Führungseinheit (10) und die Antriebseinheit (11) aus jeweils einem Strangpreßprofil (50 bzw. 60) ausgeführt sind, und daß im Strangpreßprofil (50) der Führungseinheit (10) Durchführungen (42 bis 44) für die Kolbenstange (12) und die Führungsstange (14) enthalten sind und im Strangpreßprofil (60) der Antriebseinheit (11) eine Durchführung (45) zur Ausbildung des Arbeitszylinders (15) vorgesehen ist.

4. Lineareinheit nach Anspruch 2 oder 3, dadurch gekennzeichnet, daß die Führungselemente (16, 17) in den Durchführungen (42 bis 44) der Führungseinheit (10) eingeschlossene Gleitbuchsen sind.

5. Lineareinheit nach Anspruch 3, dadurch gekennzeichnet, daß das Strangpreßprofil (60) der Antriebseinheit (11) eine weitere Durchführung (33) als Druckmittelleitung enthält.

6. Lineareinheit nach einem der Ansprüche 1 bis 5, dadurch gekennzeichnet, daß die Antriebseinheit (11) mit einer Endplatte (21) versehen ist, die die Durchführung (45) sowie die weitere Druckmittelleitung (33) druckdicht verschließt.

7. Lineareinheit nach Anspruch 6, dadurch gekennzeichnet, daß die Endplatte (21) ein Kunststoffspritzgußteil ist, in dem die Druckmittelanschlüsse (32) für den Arbeitszylinder (15) vorgesehen sind.

8. Lineareinheit nach einem der vorhergehenden Ansprüche, dadurch gekennzeichnet, daß der im Arbeitszylinder (15) bewegbare Kolben (13) von zwei Seiten druckbeaufschlagbar ist, wobei die eine Druckmittelzuleitung an der Stirnfläche des Arbeitszylinders (15) ansetzt und die zweite Druckluftzuleitung über die Druckmittelzuleitung (33) der gegenüberliegenden Seite des Arbeitszylinders (15) zugeführt ist.

9. Lineareinheit nach einem der vorhergehenden Ansprüche, dadurch gekennzeichnet, daß zwei Führungsstangen (14) vorgesehen sind, die im Bereich der Antriebseinheit (11) mittels eines Verbindungselements (28) miteinander verbunden sind, daß das Strangpreßprofil (60) der Antriebseinheit (12) für die beiden Führungsstangen (14) jeweils seitlich offene Ausnehmungen (46, 47) aufweist, in deren Bereich das Verbindungselement (28) angeordnet ist.

10. Lineareinheit nach einem der vorhergehenden Ansprüche dadurch gekennzeichnet, daß die Antriebseinheit (11) mit zwei Endlagenschaltern (36, 37), und die Führungsstange mit einem Mittel (38) zur Bedämpfung der Endschalter (36, 37) ausgerüstet ist.

11. Lineareinheit nach Anspruch 10, dadurch gekennzeichnet, daß die Endlagenschalter (36, 37) in einer Längsnut des Strangpreßteils der Antriebseinheit (11) längsverschiebbar angeordnet sind.

12. Lineareinheit nach einem der vorhergehenden Ansprüche, dadurch gekennzeichnet, daß die längsbewegten Elemente in jeder Bewegungsrichtung mit einen Anschlag (29a, b und 30a, b) versehen sind.

13. Lineareinheit nach Anspruch 10, dadurch gekennzeichnet, daß elektrische Anschlüsse (23) für die Endlagenschalter an der Endplatte (21) angeordnet sind.

14. Lineareinheit nach Anspruch 12, dadurch gekennzeichnet, daß die Anschläge (29a, b und 30a, b) mit Dämpfungsmitteln ausgerüstet sind.

## Claims

1. Pressure-medium-operated linear unit for handling equipment in industrial manufacturing, in particular a pneumatically operated linear unit, having a housing block in which at least one working cylinder for at least one piston and guide elements for at least one piston rod and at least one guide rod are accommodated, characterized in that the housing block is formed from a guide unit (10) and a drive unit (11) which are detachably connected to one another, one behind the other in the direction of the linear movement, to form a compact unit, and in that the guide unit (10) contains all the guide elements (16, 17) for the piston rod (12) and the guide rod (14).

2. Linear unit according to Claim 1, characterized in that the guide unit (10) has a constant length for all the travel lengths which are to be implemented.

3. Linear unit according to Claim 1 or 2, characterized in that the guide unit (10) and the drive unit (11) are designed from in each case one extruded profile (50 or 60 respectively), and in that the extruded profile (50) of the guide unit (10) contains bushings (42 to 44) for the piston rod (12) and the guide rod (14), and a bushing (45) in order to form the working cylinder (15) is provided in the extruded profile (60) of the drive unit (11).

4. Linear unit according to Claim 2 or 3, characterized in that the guide elements (16, 17) are sliding bushes which are enclosed in the bushings (42 to 44) of the guide unit (10).

5. Linear unit according to Claim 3, characterized in that the extruded profile (60) of the drive unit (11) contains a further bushing (33) as a pressure-medium line.

6. Linear unit according to one of Claims 1 to 5, characterized in that the drive unit (11) is provided with an end plate (21) which closes the bushing (45) and the further pressure-medium line (33) in a pressure-tight manner.

7. Linear unit according to Claim 6, characterized in that the end plate (21) is a plastic injection-moulded part in which the pressure-medium connections (32) for the working cylinder (15) are provided.

8. Linear unit according to one of the preceding claims, characterized in that pressure can be applied from two sides to the piston (13) which can move in the working cylinder (15), one pressure-medium supply line is attached to the end surface of the working cylinder (15), and the second compressed-air supply line being supplied via the pressure-medium supply line (33) to the opposite side of the working cylinder (15).

9. Linear unit according to one of the preceding claims, characterized in that two guide rods (14) are provided which are connected to one another in the region of the drive unit (11) by means of a connecting element (28), in that the extruded profile (60) of the drive unit (12) for the two guide rods (14) has in each case laterally opened recesses (46, 47) in the region of which the connecting element (28) is arranged.

10. Linear unit according to one of the preceding claims, characterized in that the drive unit (11) is equipped with two limit position switches (36, 37) and the guide rod (14) is equipped with a means (38) for damping the limit switches (36, 37).

11. Linear unit according to Claim 10, characterized in that the limit position switches (36, 37) are arranged in a longitudinally displaceable manner in a longitudinal groove in the extruded part of the drive unit (11).

12. Linear unit according to one of the preceding claims, characterized in that the longitudinally moving elements are provided with a stop (29a, b and 30a, b) in each movement direction.

13. Linear unit according to Claim 10, characterized in that the electrical connections (23) for the limit position switches are arranged on the end plate (21).

14. Linear unit according to Claim 12, characterized in that the stops (29a, b and 30a, b) are equipped with damping means.

## Revendications

1. Unité de déplacement linéaire à commande par un fluide sous pression pour des appareils de manutention utilisés dans la fabrication industrielle, notamment des unités à déplacement linéaire à commande pneumatique équipées d'un bloc formant boîtier logeant au moins un vérin de travail pour au moins un piston et des éléments de guidage pour au moins une tige de piston et au moins une barre de guidage, caractérisée en ce que le bloc formant boîtier est constitué d'une unité de guidage (10) et d'une unité d'entraînement (11) placées l'une derrière l'autre dans la direction du mouvement linéaire avec liaison amovible pour former un ensemble compact et l'unité de guidage (10) comporte tous les éléments de guidage (16, 17) pour la tige de piston (12) et la barre de guidage (14).

2. Unité de déplacement linéaire selon la revendication 1, caractérisée en ce que l'unité de guidage 10 présente une longueur constante pour toutes les longueurs de course à réaliser.

3. Unité de déplacement linéaire selon la revendication 1 ou 2, caractérisée en ce que l'unité de guidage (10) et l'unité d'entraînement (11) sont réalisées chacune en un profilé extrudé (50, 60) et le profilé extrudé (50) de l'unité de guidage (10) comporte des passages (42-44) pour la tige de piston (12) et les barres de guidage (14) et le profilé extrudé (60) de l'unité d'entraînement (11) comporte un passage (45) pour réaliser le vérin (15).

4. Unité de déplacement linéaire selon la revendication 2 ou 3, caractérisée en ce que les éléments de guidage (16, 17) dans les passages (42-44) de l'unité de guidage (10) comportent des douilles de glissement.

5. Unité de déplacement linéaire selon la revendication 3, caractérisée en ce que le profilé extrudé (60) de l'unité d'entraînement (11) comporte un autre passage (33) constituant une conduite pour le fluide sous pression.

6. Unité de déplacement linéaire selon l'une des revendications 1 à 5, caractérisée en ce que l'unité d'entraînement (11) est munie d'une plaque d'extrémité (21) qui ferme de manière étanche à la pression, le passage (45) ainsi que l'autre conduite de fluide sous pression (33).

7. Unité de déplacement linéaire selon la revendication 6, caractérisée en ce que la plaque d'extrémité (21) est une pièce injectée en matière plastique comportant les branchements (32) pour le fluide sous pression du vérin (15).

8. Unité de déplacement linéaire selon l'une des revendications précédentes, caractérisée en ce que le piston (13) mobile dans le vérin (15) est sollicité par ses deux côtés, l'une des conduites de fluide sous pression arrivant sur la face frontale du vérin (15) et la seconde conduite de fluide sous pression arrivant par la conduite de fluide sous pression (33) du côté opposé du vérin (15).

9. Unité de déplacement linéaire selon l'une des revendications précédentes, caractérisée par deux barres de guidage (14) reliées au niveau de l'unité d'entraînement (11) par un élément de liaison (28), le profilé extrudé (60) de l'unité d'entraînement (12) comportant chaque fois des cavités (46, 47) ouvertes latéralement pour les deux barres de guidage (14), et l'élément de liaison (28) est prévu dans cette zone.

10. Unité de déplacement linéaire selon l'une des revendications précédentes, caractérisée en ce que l'unité d'entraînement (11) est munie de deux commutateurs de fin de course (36, 37) et les barres de guidage (14) sont munies d'un moyen (38) pour actionner les commutateurs de fin de course (36, 37).

11. Unité de déplacement linéaire selon la revendication 10, caractérisée en ce que les commutateurs de fin de course (36, 37) sont montés coulissants longitudinalement dans une rainure longitudinale de la pièce extrudée de l'unité d'entraînement (11).

12. Unité de déplacement linéaire selon l'une des revendications précédentes, caractérisée en ce que les éléments déplacés longitudinalement sont munis pour chaque sens de déplacement, d'une butée (29a, b et 30a, b).

13. Unité de déplacement linéaire selon la revendication 10, caractérisée par des branchements électriques (23) pour les commutateurs de fin de course sur la plaque d'extrémité (21).

14. Unité de déplacement linéaire selon la revendication 12, caractérisée en ce que les butées (29a, b et 30a, b) sont munies de moyens d'actionnement.
